# EUROPEAN PATENT SPECIFICATION

(11) **EP 1 795 332 B1**
(45) Date of publication and mention of the grant of the patent: **01.03.2017**
(21) Application number: 07002450.0
(22) Date of filing: 30.10.2002
(51) Int. Cl.: B29C 70/08, B29C 70/48, B29C 70/54, B29D 24/00, B32B 3/28

(54) **Hollow cell core composite articles molded with liquid resin and method of fabrication**
Verbundwerkstoff-Körper mit hohlzelligem Kern und Verfahren zu dessen Herstellung
Articles composites moulés avec de la résine liquide comprenant une âme alvéolée et procédé de fabrication

(30) Priority: 30.10.2001 US 12664; 30.10.2001 US 21153
(43) Date of publication of application: 13.06.2007
(62) Divisional of application: 02079521.7
(73) Proprietor: The Boeing Company, Chicago, IL 60606-1596 (US)
(72) Inventor: Holemans, Peter, Sewell NJ 08080-3139 (US); Bernetich, Karl R., Wilmington DE 19808-4309 (US)
(74) Representative: Duxbury, Stephen

(56) References cited:
- EP-A- 0 786 330
- EP-A1- 0 770 472
- EP-A2- 1 005 978
- US-A- 5 851 336

## Description

### Technical Field

The present disclosure relates generally to a hollow core composite assembly, an aircraft comprising a hollow core composite assembly and a method of producing a hollow core composite assembly.

### Background of the Invention

The cornerstone of aeronautics, avionics, and spacecraft design has been the ability to design lightweight components that maintain structural strength and integrity. These characteristics play a crucial role not only in traditional design considerations such as flight capabilities and structural integrity, but also play a crucial role in the adaptability and commercial performance of a given craft design. Reduced weight and structural fortitude can play a significant role in fuel consumption, craft profile, and cargo and/or passenger capacity. The increase in profitability associated with the aforementioned factors, as well as a variety of others, has provided strong motivation for design advancements in the area of strength/weight improvement.

A significant advancement in the development of low weight/high strength structures was the development of the hollow cell cores, such as honeycomb cores. Hollow cell cores provide a high strength structural base while minimizing the negative effects of the weight associated with the core material by containing voids within the core material that provide for significant weight savings as compared to a solid component. The high strength/low weight characteristic of hollow cell cores has therefore resulted in the popularity of their use within the aeronautics industry as well as a variety of other industries.

Despite the popularity of hollow cell core materials, such as honeycomb cores, there use has not been suitable for certain manufacturing processes. Liquid molding processes, for example, can present problems when applied to hollow cell core materials. Liquid molding composite manufacturing processes, such as resin transfer molding, vacuum assisted resin infusion, vacuum infusion molding, and others, present fundamental concerns for the use of hollow cell core materials. When these processes are used, it is possible for the hollow cells to fill with liquid resin prior to curing. This can make the resulting structure resin rich, heavy, and generally undesirable. It would be highly desirable to have the ability to apply liquid molding approaches to hollow cell core materials without the concerns for compromised cells.

Numerous approaches have been developed in an attempt to solve the hollow cell core/liquid molding dilemma. Often, however, the resulting solutions add undesirable weight and/or production costs to the resulting hollow core composite articles. One solution pre-processes the core to seal the cells with film adhesive, or film adhesive and prepreg, prior to liquid molding composite article fabrication to prevent liquid molding resin from penetrating the cells. Other processes include filling the hollow cells, for example, with a closed cell foam or material. This, however, often adds undesirable weight to the resulting article. Precured composite sheets autoclaved to the hollow cell core add additional weight and require a costly autoclaving process. Although a variety of other attempts are known to seal the hollow cell core, often these attempts result in undesirable weight increases, increases in the number of processing steps, and undesirable cost increases.

It would, therefore, be highly desirable to have a method for sealing hollow cell core material such that the hollow cell core material may be successfully used with known liquid molding approaches without penetration of the hollow cells by the liquid molding. In addition, it would be highly desirable for such a protective hollow cell core material to withstand liquid molding approaches without undesirable increases in weight or the requirement for costly manufacturing processes.

Document EP 1 005 978 discloses a method of producing a cured hollow core composite assembly comprising the steps of:
- applying a first adhesive layer, to an open core surface of a hollow core base to assist the bonding of a bondable solid film to the hollow care base:
- applying a bondable solid film to the open core surface so that an inner surface of the bondable solid film is bonded with the aid of the first adhesive layer to the open core surface of the hollow core base;
- applying a second layer of adhesive to an outer surface of the bondable solid film, whereby an inner surface of the second layer of adhesive contacts the outer surface of the bondable solid layer and an outer surface of the second layer of adhesive is exposed to form an outermost layer of the assembly;
- followed by applying a liquid resin over a layer of fibers placed on the hollow core composite assembly by means of a liquid molding process, whereby the solid film prevents the liquid resin from penetrating the hollow core base,
- and curing the hollow composite assembly whereby the outermost second adhesive layer aids in securely bonding the liquid molding to the hollow core composite assembly.

### Summary of the Invention

Document EP 0 770 472 A1 discloses a method of producing a hollow core composite assembly, comprising the steps of applying a film adhesive and a solid bondable film to an open core surface, laying up dry a plurality of dry face flies on top of the solid film, and applying and curing a liquid resin to the dry face plies.

It is an object of the invention to provide an improved hollow core composite assembly and a method of producing the same.

It is a further object of the invention to provide a strong hollow core composite assembly and a method of producing the same that is able to withstand liquid molding techniques without the requirement for costly manufacturing processes.

At least one of these objects is achieved in an assembly as claimed in claim 1 and a method as claimed in claim 7.

Other objects and features of the present invention will become apparent when viewed in light of the detailed description of the preferred embodiment when taken in conjunction with the attached drawings and appended claims.

### Brief Description of the Drawings

FIGURE 1 is an exploded view illustration of an embodiment of a hollow core composite assembly in accordance with the present invention;
FIGURE 2 is an exploded view of an alternate embodiment of a hollow core composite assembly in accordance with the present invention;
FIGURE 3 is a flow-chart illustration of a method of producing a hollow core composite assembly in accordance with the present invention.

### Description of the Preferred Embodiment(s)

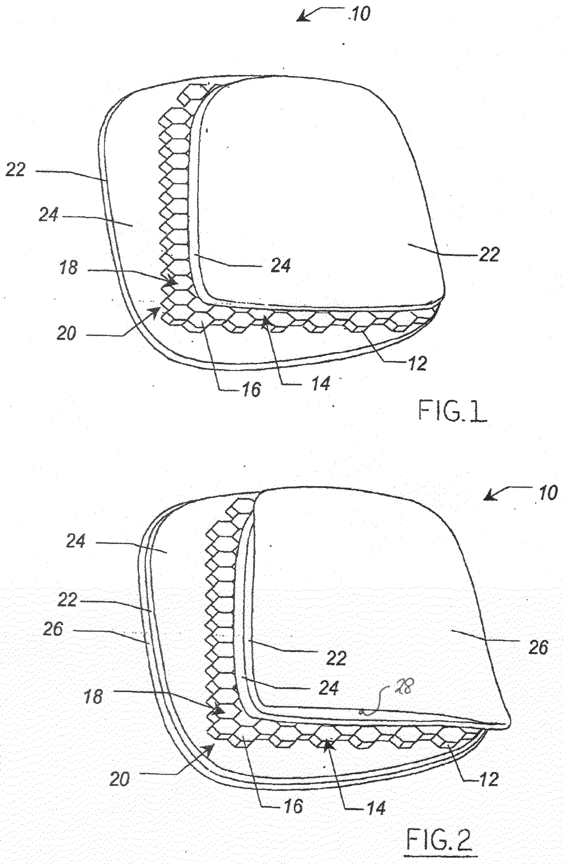

Referring now to Figure 1, which is an illustration of an embodiment of a hollow core composite assembly 10 in accordance with the present invention. The hollow core composite assembly 10 is intended for use within the aeronautics and spacecraft industry, although it is contemplated that the present invention may be utilized within a wide variety of fields.

The hollow core composite assembly 10 provides a lightweight and cost effective method of providing structural assemblies for use in aircraft and spacecraft design.

The hollow core composite assembly 10 includes a hollow core base 12 A wide variety of hollow core base 12 embodiments are known within the prior art. One such embodiment is a honeycomb core. The advantage of hollow core bases 12 is that they provide a low weight/ high strength structure popular within the aeronautics field. A traditional disadvantage to such hollow core bases 12 is that they commonly contain at least one open core surface 14 where the hollow cores 16 are exposed. This open core surface 14 provides access to the hollow cores 16 and can provide a mechanism for liquid resin from the resin transfer molding process or vacuum assisted resin transfer molding process, to penetrate the hollow core base 12 and thereby suffer losses to its weight benefits. Although it is possible for a hollow core base 12 to have a single open core surface 14, commonly a hollow core base 12 will have an upper open core surface 18 and a lower open core surface 20.

The present invention seals and protects the open core surfaces 14 through the use of a bondable solid film 22 applied to the open cores surfaces 14. The primary characteristic of the solid bondable film 22 is to be impervious to penetration of the liquid resin of choice in the composite liquid molding process (such as vinyl ester, polyester epoxies, phenolids, cyanate esters, etc.) and bondable to the hollow core base 12 with or without the addition of an adhesive. The solid bondable film 22 provides a barrier to prevent subsequent liquid molding materials from penetrating the hollow cores 16 and thereby compromising the integrity of the hollow core composite assembly 10.

Polyetherketoneketone (PEKK) is used as solid bondable film 22. The use of PEKK provides a variety of advantages over many films when the hollow core composite assembly 10 is for use in unique applications. One advantage, is that the PEKK film has a relatively low dielectric constant. This can be an important factor when the hollow core composite assembly 10 is intended for use within low observable aircraft. The low dielectric constant can be advantageous to designs wherein low radar profile or radar invisibility is desired. The use of PEKK also provides the advantage of providing a solid bondable film 22 with improved bonding characteristics over many solid films. This can improve and simplify the manufacturing process as well as improve the integrity of the resulting composite. Although the PEKK film 22 may be formed in a variety of dimensions, one embodiment contemplates the use of a 1.1 millimeter film.

The hollow core composite assembly 10 further include an adhesive layer 24 positioned between the solid bondable film 22 and the open core surface 14. The adhesive layer 24, such as an adhesive film, can be utilized to assist the bonding of the solid bondable film 22 to the hollow core base 12. Although a variety of adhesive layers 24 are contemplated, one embodiment contemplates the use of FM300 film adhesive. Other contemplated adhesives 24 include, but are not limited to, thermoplastic adhesive, hot melt adhesive, epoxy paste, BMI paste, and cyanate ester paste adhesives. It is envisioned that the solid bondable film 22 and the adhesive layer 24 are attached to the hollow core composite assembly 10 as part of the composite article perform. The thermal cycle to enhance the bonding characteristic of the solid bondable film 22 to the open core surface 14 (with the presence of the adhesive layer 24) can be included in the single processing cycle for the hollow core composite assembly 10 and thereby lower processing costs and cycle time. It should be understood, however, that the solid bondable film 22 is bonded to the hollow core base 12 prior to the composite article processing cycle as a separate processing step such as pre-curing. Pre-curing refers to curing the chemically active material of a detail/subassembly prior to a future cure of a more complete assembly. In one embodiment of the present invention, the hollow core base 12 and bondable solid film 22 can be "pre-cured" prior to a liquid molding operation. During a liquid molding operation the injectioned or infused resin would then be cured.

In an alternate novel embodiment, illustrated in Figure 2, the present invention can further include at least one outer adhesive film 26 applied to the outer surface 28 of the solid bondable film 22. A distinct and novel aspect of this embodiment is that it can assist in improving the bondable outer surface 28 of the solid bondable film 22 in order to ensure an improved hollow core composite assembly 10 when subjected to liquid molding techniques. Prior processes often required specialized surface preparation or coatings to insure that the liquid molding techniques securely bonded to the hollow core composite assembly 10. These specialized preparations could undesirably increase the cost, process steps, and time of manufacture. The present embodiment provides a relatively quick and efficient way of improving the bondable outer surface 28 of the solid bondable film 22 without the need for expensive and time consuming processes. It may also serve to increase the range of solid bondable films 22 available for a given application.

Once cured, the resulting assembly 10 becomes a sandwich panel of face skins surrounding a hollow core base 12. The liquid resin 32 is contemplated to be applied in any of a variety of known fashions. In one embodiment, it is contemplated that the liquid resin 32 is applied using a resin transfer molding process. In alternate embodiments, however, the liquid resin 32 can be applied using a variety of processes including, but not limited to, vacuum assisted resin transfer molding, vacuum infusion molding processes, etc. The liquid resin 32 may be applied to the composite article in a variety of means such as wet lay-up, resin transfer molding processes, SCRIMP, vacuum assisted resin transfer molding processes, vacuum infusion molding processes, etc. 'For each of the named processes, the liquid molding resin 32 is selected based on the process method, composite article end item requirements, composite article use and other factors. After the application of the liquid resin 32, the resin is allowed to set (or cure) to a rigid form permitting the composite article to be removed from the tool or mold. The method of cure is dependent upon the selected liquid resin 32. Many types of polyester resin commonly used in the marine industry cure at ambient temperatures (70 deg F) in a given amount of time, while many aerospace grade structural epoxy resins cure at 350 deg F. Each type of resin has varying cure requirements. After removal of the composite article from the tool or mold, it may undergo a post cure to enhance the resin properties or the composite article.

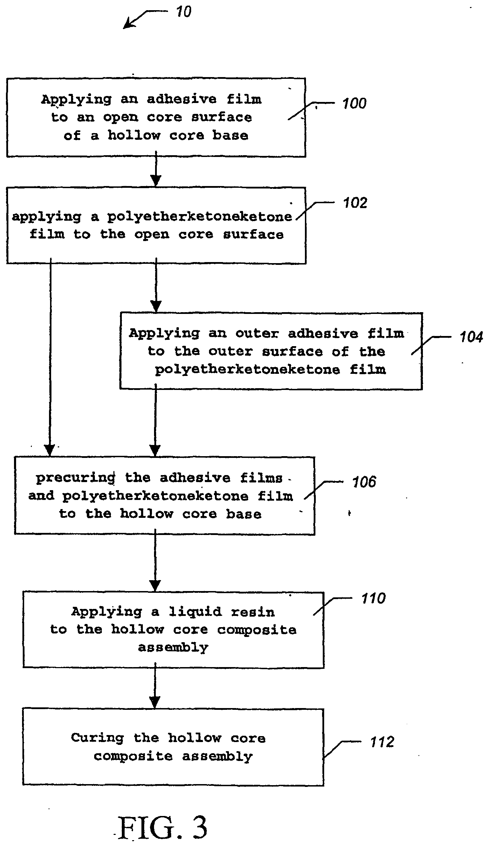

Referring now to Figure 3, which is an embodiment of a method of producing a hollow core composite assembly in accordance with the present invention. The method includes applying an adhesive film to an open core surface of a hollow core base 100. The method further includes applying a polyetherketoneketone film to the open core surface 102. In an alternate embodiment, adhesive film may be applied directly to the polyetherketoneketone film and then applied to the open core surface. The method further includes applying an outer adhesive film to the outer surface of the polyetherketoneketone film 104. In one embodiment, the method can include precuring the adhesive films and polyetherketoneketone film to the hollow core base 106. In other embodiments, however, the adhesive films and polyetherketoneketone films may be cured to the hollow core base as part of a resin application process. A liquid resin can then applied to the hollow core composite assembly 110. This may be accomplished in a single liquid resin application or may include a plurality of liquid resin applications. In addition, it is contemplated that the liquid resin may be applied in a variety of fashions including, but not limited to resin transfer molding and vacuum infusion molding processes. Finally, the hollow core composite assembly is cured 112. A variety of curing processes are contemplated by the present invention and may be used alone or in combination to effectuate curing base upon the curing requirements of the liquid resin, the adhesive film, and the hollow core base.

## Claims

1. A hollow core composite assembly (10), comprising:
- a hollow core base (12) including at least one open core surface (14);
- at least one solid bondable film (22) applied to said at least one open core surface;
- at least one adhesive layer (24) positioned between said at least one solid bondable film and said at least one open core surface; and
- a plurality of dry face plies (30) laid up dry and placed on said at least one solid film; and
- a cured liquid resin, which has been applied to said dry face plies;
wherein the solid bondable film (22) is affixed to said at least one open core surface and the adhesive layer (24) is positioned between the open core surface and the solid bondable film to provide a barrier for subsequent liquid molding materials penetrating the hollow core base;
**characterized in that** the solid bondable film (22) is a PEKK (polyetherketoneketone) film.

2. A hollow core composite assembly (10) according to claim 1, wherein said hollow core base (12) is a honeycomb core.

3. A hollow core composite assembly (10) according to any of the preceding claims, wherein said liquid resin is applied to said at least one dry face ply (30) using one or more of the following: resin transfer molding, vacuum assisted resin transfer molding, vacuum assisted resin infusion.

4. A hollow core composite assembly (10) according to any of the preceding claims, wherein said at least one adhesive layer is an uncured adhesive film.

5. A hollow core composite assembly (10) according to any of the preceding claims, wherein the adhesive layer comprises one or more of the following: epoxy paste adhesive, cyanate ester paste adhesive, thermoset adhesive, a thermoplastic adhesive, a hot melt adhesive, a BMI paste adhesive and/or wherein the at least one solid bonded film is pre-cured to the at least one open core surface prior to liquid molding operation.

6. Aircraft comprising a hollow core composite assembly (10) according to any of the preceding claims.

7. A method of producing a hollow core composite assembly (10), the method comprising the steps of:
- applying a film adhesive (24) to an open core surface of a hollow core base;
- applying a solid bondable film (22) to said open core surface;
- laying up dry a plurality of dry face plies (30) on top of the solid film;
- applying liquid resin to said dry face plies; and
- curing the hollow core composite assembly;
wherein applying a solid bondable film comprises applying a PEKK (polyetherketoneketone) film onto said open core surface to provide a barrier for subsequent liquid molding materials penetrating the hollow core base.

8. A method of producing a hollow core composite assembly (10) as described in claim 7, further comprising curing said solid film to said open core surface by said applying liquid resin.

9. A method of producing a hollow core composite assembly (10) according to claim 7 or 8, further comprising pre-curing said solid bondable film to said open core surface.

10. A method of producing a hollow core composite assembly (10) according to any of the claims 7-9, wherein said applying liquid resin is accomplished utilizing one or more of the following, a resin transfer molding process, vacuum assisted resin transfer molding process, vacuum assisted resin infusion and/or wherein the at least one solid bonded filmj is pre-cured to said at least one open core surface prior to liquid molding operation.

11. A method of producing a hollow core composite (10) according to claim 7, wherein at least one outer adhesive film is applied to an outer side of said PEKK film.

12. A method of producing a hollow core composite (10)according to claims 10 or 11, comprising pre-curing said uncured adhesive layer and said PEKK film to the hollow core base.

13. A method according to claim 12, wherein curing said uncured adhesive layer and said PEKK film to the hollow core base form part of the liquid molding application process.

## Patentansprüche

1. Hohlkernverbundwerkstoffanordnung (10), die umfasst:
- eine Hohlkernbasis (12), die wenigstens eine offene Kernfläche (14) umfasst;
- wenigstens einen festen verbindbaren Film (22), der auf die wenigstens eine offene Kernfläche aufgebracht wird;
- wenigstens eine Klebeschicht (24), die zwischen dem wenigstens einen festen verbindbaren Film und der wenigstens einen offenen Kernfläche angeordnet ist; und
- eine Mehrzahl von trockenen Decklagen (30), die trocken auf den wenigstens einen festen Film aufgelegt und angeordnet werden; und
- ein gehärtetes flüssiges Harz, das auf die trockenen Decklagen aufgebracht wurde;
wobei der feste verbindbare Film (22) an der wenigstens einen offenen Kernfläche befestigt ist und die Klebeschicht (24) zwischen der offenen Kernfläche und dem festen verbindbaren Film angeordnet ist, um eine Barriere gegen das nachfolgende Eindringen von flüssigen Formmaterialien in die Hohlkernbasis zu bilden;
**dadurch gekennzeichnet, dass** es sich bei dem festen verbindbaren Film (22) um einen Polyetherketonketon (PEKK) -Film handelt.

2. Hohlkernverbundwerkstoffanordnung (10) gemäß Anspruch 1, wobei es sich bei der Hohlkernbasis (12) um einen Wabenkern handelt.

3. Hohlkernverbundwerkstoffanordnung (10) gemäß einem der vorangegangenen Ansprüche, wobei das flüssige Harz auf die wenigstens eine trockene Decklage (30) aufgebracht wird mit Hilfe von wenigstens einem der folgenden: Harz-Spritzpressen, Vakuum-unterstütztes Harz-Spritzpressen, Vakuum-unterstützte Harz-Infusion.

4. Hohlkernverbundwerkstoffanordnung (10) gemäß einem der vorangegangenen Ansprüche, wobei es sich bei der wenigstens einen Klebeschicht um einen ungehärteten Klebefilm handelt.

5. Hohlkernverbundwerkstoffanordnung (10) gemäß einem der vorangegangenen Ansprüche, wobei die Klebeschicht wenigstens einen der folgenden umfasst: einen Epoxidpastenklebstoff, einen Cyanatesterpastenklebstoff, einen wärmehärtenden Klebstoff, einen thermoplastischen Klebstoff, einen Heißschmelzklebstoff, einen BMI-Pastenklebstoff, und/oder wobei der wenigstens eine feste verbindbare Film vor dem Flüssigformungsvorgang an die wenigstens eine offene Kernfläche vorgehärtet wird.

6. Flugzeug, das eine Hohlkernverbundwerkstoffanordnung (10) gemäß einem der vorangegangenen Ansprüche umfasst.

7. Verfahren zur Herstellung einer Hohlkernverbundwerkstoffanordnung (10), wobei das Verfahren die folgenden Schritte umfasst:
- Aufbringen eines Filmklebstoffs (24) auf eine offene Kernfläche einer Hohlkernbasis;
- Aufbringen eines festen verbindbaren Films (22) auf die offene Kernfläche;
- trockenes Auflegen einer Mehrzahl von trockenen Decklagen (30) auf den festen verbindbaren Film;
- Aufbringen von flüssigem Harz auf die trockenen Decklagen; und
- Aushärten der Hohlverbundwerkstoffanordnung;
wobei das Aufbringen eines festen verbindbaren Films umfasst: Aufbringen eines Polyetherketonketon (PEKK) -Films auf die offene Kernfläche, um eine Barriere gegen das nachfolgende Eindringen von flüssigen Formmaterialien in die Hohlkernbasis zu bilden.

8. Verfahren zur Herstellung einer Hohlkernverbundwerkstoffanordnung (10) gemäß Anspruch 7, das weiterhin das Aushärten des festen verbindbaren Films auf der offenen Kernfläche durch Aufbringen des flüssigen Harzes umfasst.

9. Verfahren zur Herstellung einer Hohlkernverbundwerkstoffanordnung (10) gemäß Anspruch 7 oder 8, das weiterhin das Vorhärten des festen verbindbaren Films auf der offenen Kernfläche umfasst.

10. Verfahren zur Herstellung einer Hohlkernverbundwerkstoffanordnung (10) gemäß einem der Ansprüche 7 bis 9, wobei das Aufbringen des flüssigen Harzes durch die Verwendung wenigstens eines der folgenden durchgeführt wird: Harz-Spritzpressen, Vakuum-unterstütztes Harz-Spritzpressen, Vakuum-unterstützte Harz-Infusion, und/oder wobei der wenigstens eine feste verbindbare Film vor dem Flüssigformungsvorgang auf die wenigstens eine offene Kernfläche vorgehärtet wird.

11. Verfahren zur Herstellung einer Hohlkernverbundwerkstoffanordnung (10) gemäß Anspruch 7, wobei wenigstens ein äußerer Klebefilm auf eine äußere Seite des PEKK-Films aufgebracht wird.

12. Verfahren zur Herstellung einer Hohlkernverbundwerkstoffanordnung (10) gemäß Anspruch 10 oder 11, welches das Vorhärten der ungehärteten Klebeschicht und des PEKK-Films auf der Hohlkernbasis umfasst.

13. Verfahren gemäß Anspruch 12, wobei das Aushärten der ungehärteten Klebeschicht und des PEKK-Films auf der Hohlkernbasis ein Bestandteil des Flüssigformaufbringungsvorgangs ist.

## Revendications

1. Ensemble composite à âme à cavités (10), comprenant :
- une base formant âme à cavités (12) comprenant au moins une surface d'âme ouverte (14),
- au moins un film solide collable (22) appliqué sur ladite au moins une surface d'âme ouverte,
- au moins une couche adhésive (24) disposée entre ledit au moins un film solide collable et ladite au moins une surface d'âme ouverte, et
- une pluralité de couches de parement sèches (30) disposées à sec et placées sur ledit au moins un film solide, et
- une résine liquide durcie, qui a été appliquée sur lesdites couches de parement sèches ;
dans lequel ledit film solide collable (22) est fixé sur ladite au moins une surface d'âme ouverte et la couche adhésive (24) est disposée entre la surface d'âme ouverte et le film solide collable afin d'assurer une barrière contre la pénétration subséquente des matières de moulage liquides dans la base formant âme à cavités ;
**caractérisé en ce que** le film solide collable (22) est un film de PEKK (polyéthercétonecétone).

2. Ensemble composite à âme à cavités (10) selon la revendication 1, dans lequel ladite base formant âme à cavités (12) est une âme alvéolaire.

3. Ensemble composite à âme à cavités (10) selon l'une quelconque des revendications précédentes, dans lequel ladite résine liquide est appliquée sur ladite au moins une couche de parement sèche (30) selon un ou plusieurs des procédés suivants : moulage par transfert de résine, moulage par transfert de résine sous vide, infusion de résine sous vide.

4. Ensemble composite à âme à cavités (10) selon l'une quelconque des revendications précédentes, dans lequel ladite au moins une couche adhésive est un film adhésif non durci.

5. Ensemble composite à âme à cavités (10) selon l'une quelconque des revendications précédentes, dans lequel la couche adhésive comprend un ou plusieurs des adhésifs suivants : adhésif en pâte à base d'époxy, adhésif en pâte à base d'ester de cyanate, adhésif thermodurcissable, adhésif thermoplastique, adhésif thermofusible, adhésif en pâte à base de BMI et/ou dans lequel l'au moins un film solide collable est prédurci sur l'au moins une surface d'âme ouverte préalablement à l'opération de moulage liquide.

6. Aéronef comprenant un ensemble composite à âme à cavités (10) selon l'une quelconque des revendications précédentes.

7. Procédé de production d'un ensemble composite à âme à cavités (10), le procédé comprenant les étapes consistant à :
- appliquer un film d'adhésif (24) sur une surface d'âme ouverte d'une base formant âme à cavités,
- appliquer un film solide collable (22) sur ladite surface d'âme ouverte,
- disposer à sec une pluralité de couches de parement sèches (30) par-dessus le film solide,
- appliquer une résine liquide sur lesdites couches de parement sèches, et
- faire durcir l'ensemble composite à âme à cavités ;
l'application d'un film solide collable comprenant l'application d'un fil de PEKK (polyéthercétonecétone) sur ladite surface d'âme ouverte afin d'assurer une barrière contre la pénétration subséquente des matières de moulage liquides dans la base formant âme à cavités.

8. Procédé de production d'un ensemble composite à âme à cavités (10) tel que décrit dans la revendication 7, comprenant en outre le durcissement dudit film solide sur ladite surface d'âme ouverte sous l'effet de ladite application de résine liquide.

9. Procédé de production d'un ensemble composite à âme à cavités (10) selon la revendication 7 ou 8, comprenant en outre un prédurcissement dudit film solide collable sur ladite surface d'âme ouverte.

10. Procédé de production d'un ensemble composite à âme à cavités (10) selon l'une quelconque des revendications 7 à 9, dans lequel ladite application de résine liquide s'effectue au moyen d'un ou plusieurs des procédés suivants : procédé de moulage par transfert de résine, procédé de moulage par transfert de résine sous vide, infusion de résine sous vide, et/ou dans lequel l'au moins un film solide collable est prédurci sur l'au moins une surface d'âme ouverte préalablement à l'opération de moulage liquide.

11. Procédé de production d'un ensemble composite à âme à cavités (10) selon la revendication 7, dans lequel au moins un film adhésif extérieur est appliqué sur une face extérieure dudit film de PEKK.

12. Procédé de production d'un ensemble composite à âme à cavités (10) selon la revendication 10 ou 11, comprenant un prédurcissement de ladite couche adhésive non durcie et dudit film de PEKK sur la base formant âme à cavités.

13. Procédé selon la revendication 12, dans lequel le durcissement de ladite couche adhésive non durcie et dudit film de PEKK sur la base formant âme à cavités fait partie du procédé d'application de moulage liquide.
